# FASCICULE DE BREVET EUROPEEN

(11) **EP 1 851 008 B1**
(45) Date de publication et mention de la délivrance du brevet: **04.07.2018**
(21) Numéro de dépôt: 06724869.0
(22) Date de dépôt: 23.02.2006
(51) Int. Cl.: B23Q 17/12, B25B 21/00, G05B 19/4065, B23P 19/06

(54) **OUTILLAGE COMPRENANT AU MOINS UN ORGANE ROTATIF ET DES MOYENS DE MESURE DE FREQUENCES VIBRATOIRES DUDIT ORGANE EN VUE DE DETERMINER SON ETAT D'USURE, UNITE DE CONTROLE ET PROCEDE CORRESPONDANTS**
VORRICHTUNG MIT MINDESTENS EINEM ROTIERENDEN ELEMENT UND MITTEL ZUR MESSUNG DER VIBRATIONSFREQUENZEN DES BESAGTEN ELEMENTS ZUR BESTIMMUNG SEINER VERSCHLEISSERWARTUNGEN SOWIE ENTSPRECHENDE STEUERUNGSEINHEIT UND ENTSPRECHENDES VERFAHREN
EQUIPMENT COMPRISING AT LEAST ONE ROTARY MEMBER AND MEANS FOR MEASURING VIBRATIONAL FREQUENCIES OF SAID MEMBER TO DETERMINE ITS WEAR CONDITION, CORRESPONDING CONTROL UNIT AND METHOD

(30) Priorité: 24.02.2005 FR 0501908
(43) Date de publication de la demande: 07.11.2007
(73) Titulaire: ETABLISSEMENTS GEORGES RENAULT, 44800 Saint Herblain (FR)
(72) Inventeur: PINEAU, Laurent, F-44100 Nantes (FR); GILIBERT, Arnaud, 44400 Reze (FR); LE DU, Nicolas, F-44000 Nantes (FR); MARIE, Vincent, F-44400 Reze (FR); ALLENOU, Benoît, 44700 Orvault (FR)
(74) Mandataire: Vidon Brevets & Stratégie
(86) Numéro de dépôt international: PCT/EP2006/060205
(87) Numéro de publication internationale: WO 2006/089925

(56) Documents cités:
- WO-A-00/73018
- DE-A1- 4 334 933
- DE-A1- 19 728 909
- FR-A- 2 427 173

## Description

Le domaine de l'invention est celui de l'outillage. Plus précisément, l'invention concerne l'outillage industriel, et en particulier les outillages prévus pour exercer un vissage avec un couple déterminé.

Dans le domaine de l'invention, les outils de vissage sont très largement utilisés dans le secteur industriel, que les outils soient fixes (ce qui comprend les outils montés sur machines ou sur les manipulateurs) ou portatifs.

Ces outils peuvent intégrer des moyens moteurs électriques ou pneumatiques selon les applications envisagées.

Selon une mise en oeuvre répandue de ces outils, ceux-ci sont reliés par une connectique appropriée à un contrôleur électronique (sous forme d'un coffret) permettant de programmer un nombre important de cycles de fonctionnement (par exemple 250 cycles), chaque cycle pouvant être composé de 20 phases de fonctionnement.

Ces cycles peuvent être programmés directement à partir d'un clavier que comporte le coffret électronique ou par un logiciel de programmation associé (le ou les coffrets étant alors reliés au système de programmation par un réseau de type terrain, Ethernet ou autres).

Ces systèmes permettant d'assurer une traçabilité des opérations effectuées par l'outil, en assurant par exemple l'enregistrement de résultats tels que le couple final de vissage, la vitesse de vissage l'angle final de vissage, la date et l'heure des opérations ou encore les courbes représentatives de la qualité (bonne ou mauvaise, en fonction de paramètres prédéterminés) du vissage effectué.

L'outil lui-même peut également comporter des moyens d'indications de la qualité de vissage, par exemple en fournissant un compte-rendu « Bon/Mauvais » visualisable à l'aide de leds.

On comprend que les systèmes de ce type permettent d'effectuer une gamme étendue d'opérations de paramétrage et de contrôle.

Toutefois, comme cela a été mentionné précédemment, les ensembles d'outillage tels que ceux qui viennent d'être décrits nécessitent le recours à des réseaux de connectique plus ou moins conséquents pour relier les contrôleurs aux outils et, les contrôleurs aux matériels de programmation.

On comprend que ces contraintes peuvent se traduire par une augmentation du coût d'exploitation.

Selon une autre technique connue, l'outil est relié au secteur électrique de façon à alimenter une électronique de commande intégrée à l'outil. Dans ce cas, l'outil dispose d'un petit afficheur et de quelques boutons de commande.

On comprend que, dans l'une ou l'autre des technologies décrites précédemment, les données concernant le couple de serrage sont essentielles pour commander correctement les outils et pour pouvoir obtenir un suivi des résultats de vissage.

En effet, les données sur le couple de serrage sont utilisés à de nombreuses reprises, pour assurer bien entendu la qualité de l'assemblage à réaliser par vissage, mais également pour permettre une traçabilité des opérations et pour procéder à un traitement statistique des données de serrage.

De plus, les outils sont pilotés par des moyens de commande, intégrés dans l'outil ou externes à l'outil, qui définissent les paramètres de fonctionnement de l'outil en fonction d'un assemblage à réaliser.

Or, que ce soit pour le contrôle et/ou le suivi des paramètres de vissage ou pour la bonne exécution de ces paramètres, il est nécessaire de s'assurer avant tout du bon état de fonctionnement des outils.

En d'autres termes, la fiabilité des outils doit pouvoir être vérifiée, et ceci régulièrement durant toute la durée d'utilisation des outils, de façon à pouvoir effectuer une maintenance, de préférence préventive. On cherche ainsi à éviter notamment les états d'usure conduisant à la casse des outils sur ligne de production, nécessitant alors l'arrêt de cette ligne pour le remplacement de l'outil. Ceci nuit bien entendu au rendement global de la ligne de production concernée.

Actuellement, la maintenance préventive se limite à des préconisations des fournisseurs d'outils, ces préconisations se traduisant par une périodicité d'entretien.

Eventuellement, un système de calculs effectués par un logiciel contenu dans un coffret de pilotage de l'outil détermine automatiquement la périodicité d'entretien en fonction des conditions réelles d'utilisation de l'outil (couple, vitesse, température...).

On comprend que dans l'un ou l'autre cas, les préconisations d'entretien procèdent d'une approche empirique conduisant seulement à une estimation de l'usure de l'outil.

Une telle approche de l'entretien et/ou de la maintenance des outils peut donc conduire à deux types de situation :
- les préconisations sont prudentes et encouragent à un entretien ou une maintenance plus fréquente que nécessaire : ceci tend à augmenter le coût d'exploitation des outils ;
- certains outils se dégradent entre deux préconisations d'entretien, au point éventuellement d'entraîner une défectuosité définitive des outils concernés, se traduisant éventuellement par une casse des outils pendant utilisation ; cela peut aussi causer des malfaçons concernant les assemblages réalisés par un outil défectueux avant que l'état de celui-ci soit détecté ; en tout état de cause, ce type de situation est inacceptable en ce qu'elle peut entraîner notamment des pertes d'exploitation non négligeables.

On connaît par la demande de brevet FR 2 427 173 un dispositif de détection des détériorations des dents d'une fraise. Ce dispositif mesure les vibrations, les augmentations et en particulier les augmentations anormales de vibration de la fraiseuse pour détecter les détériorations des dents.

L'invention a notamment pour objectif de pallier les inconvénients de l'art antérieur.

Plus précisément, l'invention a pour objectif de proposer une technique de maintenance préventive des outillages comprenant un outil intégrant un organe rotatif, tels les outils de vissage, qui soit basée sur une détermination de l'état d'usure réel de l'outil.

L'invention a également pour objectif de fournir une telle technique qui permette de rendre compte en temps réel, ou quasiment, de l'état d'usure des outils.

L'invention a aussi pour objectif de fournir une telle technique qui contribue à augmenter le rendement des lignes de production équipées de tels outils, ceci notamment en optimisant les interventions d'entretien et/ou de maintenance.

Un autre objectif de l'invention est de fournir une solution ergonomique pour la mise en oeuvre d'une telle technique.

Encore un autre objectif de l'invention est de fournir une telle technique qui soit simple de conception et facile à mettre en oeuvre.

Ces objectifs, ainsi que d'autres qui apparaîtront par la suite, sont atteints grâce à l'invention qui a pour objet un outil de vissage comprenant au moins un organe rotatif monté dans un corps d'outil et susceptible de produire au moins une fréquence vibratoire représentative d'un état d'usure dudit ou desdits organes rotatifs, caractérisé en ce qu'il comprend des moyens de mesure de ladite ou desdites fréquences vibratoires destinés à communiquer avec des moyens de traitement de ladite mesure permettant de comparer celle-ci à au moins une fréquence de référence en vue de déterminer ledit état d'usure.

Ainsi, grâce à l'invention, on peut déterminer l'état d'usure réel d'un outil, et plus précisément du ou des organes rotatifs qui le composent.

En effet, chaque organe rotatif de l'outil produit une fréquence caractéristique qu'il est possible de calculer, celle-ci étant fonction de la vitesse de rotation et de la géométrie de l'organe considéré.

On peut ensuite pour un outil neuf et, pour chacune des fréquences caractéristiques, procéder à une mesure et à un enregistrement de l'amplitude. Ces amplitudes constituent les amplitudes de référence correspondant à un état neuf de l'outil.

Durant la vie de l'outil, les organes mécaniques tendent à s'user et leur amplitude vibratoire augmente. La mesure de l'amplitude des fréquences caractéristiques et leur comparaison avec les amplitudes de référence permet d'évaluer le degré d'usure des différents organes.

On comprend donc que l'invention permet d'optimiser les interventions d'entretien et/ou de maintenance, celles-ci étant déclenchées et réalisées sur la base d'un état d'usure mesuré et non plus seulement évalué.

On peut donc de cette façon mieux anticiper des situations d'usure, voire de casse des outils.

Plus généralement, l'invention permet d'obtenir des gains sur de nombreuses opérations de contrôle et/ou sur la qualité d'assemblage, ceci en s'assurant régulièrement du bon état des outils et donc de leur fiabilité.

Selon l'invention ledit ou lesdits organes rotatifs sont destinés à produire un couple de serrage, lesdits moyens de mesure comprenant au moins des moyens de mesure dudit couple.

En effet, on constate que le signal de mesure de couple inclut toutes les données représentatives des vibrations du ou des organes rotatifs de l'outil.

En d'autres termes, la mesure du couple de serrage fournit les éléments d'information nécessaire à la mesure d'état d'usure, sans qu'il soit nécessaire d'ajouter des composants dans le corps de l'outil ou de modifier les composants existants.

Avantageusement, lesdits moyens de traitement comprennent des moyens de calcul permettant de traiter un spectre de fréquences obtenu à partir d'un signal transmis par lesdits moyens de mesure dudit couple.

Ainsi, le signal de mesure de couple peut présenter un spectre dont les raies sont aisément comparables à une fréquence de référence ou à une série de fréquences de référence.

Préférentiellement, lesdits moyens de traitement comprennent des moyens de mémorisation d'une fréquence de référence relative à chacun desdits organes rotatifs.

De cette façon, on peut émettre un diagnostic d'état d'usure non seulement pour le moteur mais également pour les organes rotatifs associés, chacun étant caractérisé par une fréquence vibratoire de référence.

Dans ce cas, une fréquence de référence est préférentiellement mémorisée pour l'un au moins des organes appartenant au groupe suivant :
- moteur ;
- organe de renvoi d'angle ;
- organe d'engrènement.

On note que dans le cas où un organe de renvoi d'angle est mis en oeuvre, la tête de l'outil intègre un couple conique et des roulements à billes qui sont des organes mécaniques sensibles et capables de produire une fréquence caractéristique dont on peut, au même titre que pour les autres organes tournants, comparer l'amplitude avec des amplitudes de référence.

Selon une solution préférée, lesdits moyens de traitement sont intégrés dans une unité de contrôle distincte dudit outil.

On peut ainsi recueillir toutes les informations relatives à la maintenance préventive sur une unité indépendante de l'outil, cette unité pouvant par ailleurs exercer d'autres fonctions telles que la commande et/ou le paramétrage de l'outil.

On note que le fait de répartir et de traiter les informations de maintenance préventive sur une unité de contrôle distincte de l'outil permet d'utiliser les outils existants actuellement, sans modification de ceux-ci.

Toutefois, il est possible dans d'autres modes de réalisation envisageables, d'intégrer le traitement des informations de maintenance directement sur l'outil, dans la mesure où les dimensions de celui-ci le permettent.

Avantageusement, ladite unité comprend au moins un afficheur.

On peut ainsi afficher des informations précises, par le biais d'écritures. Toutefois, le recours à des signaux visuels, par exemple lumineux et de couleurs, peut également être envisagé.

Préférentiellement, ladite unité comprend des moyens de communication susceptible d'être reliée à un réseau de communication.

L'unité de contrôle peut ainsi adresser des informations à une unité distante, de centralisation des données par exemple, par le biais notamment du réseau informatique d'une entreprise.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue en coupe d'outil intégré à un ensemble d'outillage selon l'invention ;
- la figure 2 est un diagramme fonctionnel d'un outillage selon l'invention ;
- la figure 3 est une vue d'une mesure de fréquence vibratoire obtenue avec un outillage selon l'invention.

Selon le mode de réalisation préférentiel décrit par la suite, l'outillage auquel s'applique l'invention comprend un outil de vissage.

On note toutefois que l'invention peut s'appliquer à tout outillage incluant un outil dont un organe est rotatif, ce dernier émettant une fréquence vibratoire susceptible d'être mesurée et comparée à une fréquence de référence en vue de déterminer l'état d'usure de l'outil.

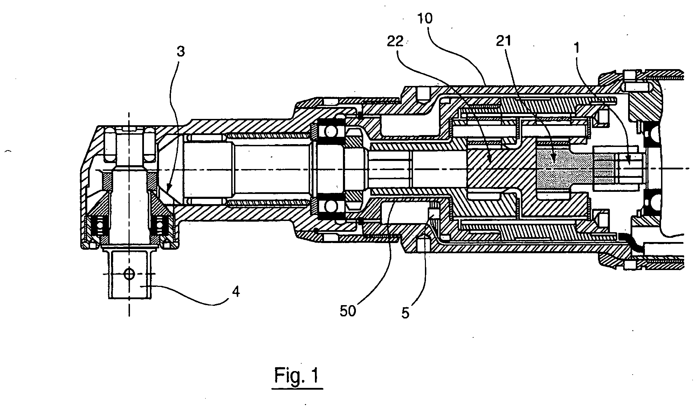

En référence à la figure 1, un outil de vissage selon le présent mode de réalisation comprend un moteur (non représenté) monté dans le corps 10 de l'outil, la sortie moteur 11 étant couplée à un premier étage d'engrènement 21, lui-même couplé à un deuxième étage d'engrènement 22, ce dernier étant à son tour couplé à un engrènement de renvoi d'angle 3 (l'axe de vissage étant ici perpendiculaire à l'axe moteur ; l'engrènement 3 peut être absent dans le cas d'un autre mode de réalisation envisageable selon lequel l'axe de vissage et l'axe moteurs sont coaxiaux) destiné à entraîner en rotation une tête de vissage présentant un embout 4 prévu pour recevoir une douille de vissage.

De façon connue en soi, un capteur de couple 5 (en l'occurrence un pont de jauges de contraintes) est monté sur un support cylindrique 50 de façon à transmettre des informations relatives au couple de serrage exercé par l'outil.

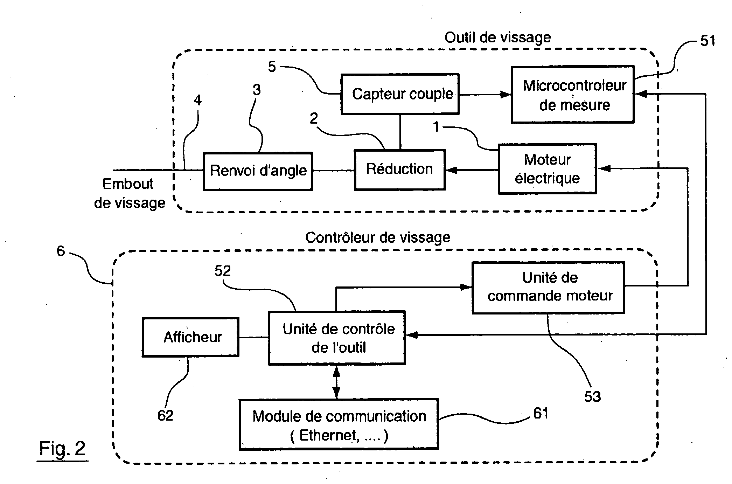

Sur le diagramme fonctionnel de la figure 2, les organes mécaniques sont cette fois représentés sous forme schématique de façon à faire apparaître le moteur 1, un réducteur 2 (comprenant le premier étage d'engrènement 21 et le deuxième étage d'engrènement 22 mentionnés précédemment).

Tel qu'illustré, le capteur de couple 5 est relié à un microcontrôleur de mesure qui transmet les donnés à une unité de contrôle 52 de l'outil.

En fonction des données fournies par le capteur de couple 5, l'unité de contrôle pilote le fonctionnement du moteur 1 par l'intermédiaire d'une unité de commande 53.

L'unité de contrôle 52 intègre en outre des moyens de traitement du signal fourni par le capteur de couple pour identifier les fréquences vibratoires émises par chacun des organes rotatifs de l'outil (moteur, premier et deuxième étages d'engrènement, engrènement de renvoi d'angle) de façon à comparer les fréquences mesurées avec des fréquences de référence propres à chaque organe et caractérisant un état d'usure zéro.

Les fréquences vibratoires des organes rotatifs de l'outil apparaissent sous forme d'un spectre de fréquence compris dans le signal fourni par le capteur de couple, un tel signal étant explicité plus en détails par la suite.

Le traitement des fréquences vibratoires est effectué à l'aide de moyens de calcul et de mémorisation inclus dans l'unité de contrôle 52, des fréquences de référence étant mémorisées dans celle-ci en vue d'être comparées, à l'aide des moyens de calcul, aux fréquences mesurées.

Selon le présent mode de réalisation, l'unité de contrôle 52 et l'unité.de commande sont intégrées dans une unité 6, désignées par le terme de « contrôleur de vissage » sur la figure 2, distincte de l'outil.

Le contrôleur de vissage intègre en outre :
- un module de communication 61 permettant de relier le contrôleur à un réseau d'échanges d'information par exemple de type Ethernet ;
- un afficheur 62.

Ainsi constitué, lorsque l'unité de contrôle détecte que l'amplitude d'une fréquence vibratoire d'un organe de l'outil devient supérieure à la fréquence de référence correspondante, un signal et/ou un message pré-déterminé est affiché sur l'afficheur 62, et éventuellement envoyé à un poste distant par l'intermédiaire du module de communication.

Un tel message indique l'organe défaillant concerné et précise éventuellement le type de maintenance et/ou d'entretien à effectuer.

On rappelle que le couple de vissage est déterminé à partir d'une tension transmise par le capteur de couple.

A partir de cette tension, on peut obtenir un spectre de fréquences.

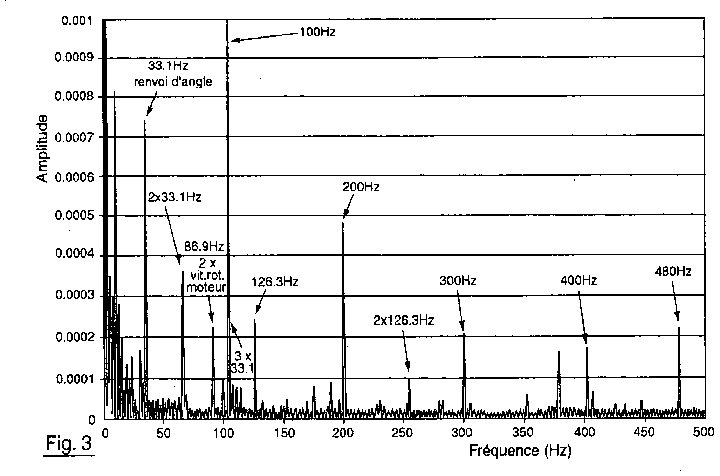

La figure 3 montre un spectre de fréquences mesuré à l'aide d'un capteur de couple d'un outil de vissage tel que décrit précédemment.

A titre indicatif, l'outil en question présente une plage de couple allant de 5 N.m à 30 N.m, pour une vitesse maximum de 1140 t/mn.

Tel que cela apparaît, ce signal présente un certain nombre de raies correspondant notamment aux fréquences vibratoires émises par :
- l'engrènement de renvoi d'angle (33,1 Hz) ;
- le moteur (86,9 Hz, correspondant à deux fois la vitesse du moteur).

On note que dans un spectre, une fréquence (appelée alors fondamentale) peut engendrer des harmoniques c'est-à-dire des fréquences multiples de la fondamentale. On retrouve alors dans le spectre des raies de fréquence à des valeurs deux fois ou trois fois la valeur de la fréquence de la fondamentale (ou plus).

Dans le cas présent :
- le renvoi d'angle engendre une fondamentale à 33,1 Hz et deux harmoniques ;
- la perturbation électrique engendre une fondamentale à 100 Hz et trois harmonique ;
- le premier étage de la réduction engendre une fondamentale à 480 Hz

Un spectre de ce type est donc détecté et enregistré pour un état d'usure zéro de l'outil. Au fil des mesures successives, l'unité de contrôle traite le signal de façon à vérifier si l'amplitude d'une (ou de plusieurs) des raies augmente et, le cas échéant, émettre un signal ou un message d'alerte.

## Revendications

1. Outil de vissage comprenant au moins un organe rotatif (1), (21), (22), (3) monté dans un corps d'outil (10) et susceptible de produire au moins une fréquence vibratoire représentative d'un état d'usure dudit ou desdits organes rotatifs,
**caractérisé en ce qu'**il comprend des moyens de mesure (5) de ladite ou desdites fréquences vibratoires destinés à communiquer avec des moyens de traitement (52) de ladite mesure permettant de comparer celle-ci à au moins une fréquence de référence en vue de déterminer ledit état d'usure,
ledit ou lesdits organes rotatifs (1), (21), (22), (3) étant destinés à produire un couple de serrage, lesdits moyens de mesure (5) comprenant au moins des moyens de mesure dudit couple.

2. Outil de vissage selon la revendication 1, **caractérisé en ce que** lesdits moyens de traitement (52) comprennent des moyens de calcul permettant de traiter un spectre de fréquences obtenu à partir d'un signal transmis par lesdits moyens de mesure (5) dudit couple.

3. Outil de vissage selon l'une des revendications 1 et 2, **caractérisé en ce que** lesdits moyens de traitement (52) comprennent des moyens de mémorisation d'une fréquence de référence relative à chacun desdits organes rotatifs (1), (21), (22), (3).

4. Outil de vissage selon la revendication 3, **caractérisé en ce qu'**une fréquence de référence est mémorisée pour l'un au moins des organes appartenant au groupe suivant :
- moteur (1) ;
- organe de renvoi d'angle (3) ;
- organe d'engrènement (21), (22).

5. Outil de vissage selon l'une quelconque des revendications 1 à 4, **caractérisé en ce qu'**il comprend des moyens d'émission d'une alerte lorsque l'une au moins desdites fréquences vibratoires mesurées atteint un niveau prédéterminé par rapport à une fréquence de référence.

6. Outil de vissage selon l'une quelconque des revendications 1 à 5, **caractérisé en ce que** lesdits moyens de traitement (52) sont intégrés dans une unité de contrôle (6) distincte dudit outil.

7. Outil de vissage selon la revendication 6, **caractérisé en ce que** ladite unité (6) comprend au moins un afficheur (62).

8. Outil de vissage selon l'une des revendications 6 et 7, **caractérisé en ce que** ladite unité (6) comprend des moyens de communication (61) susceptible d'être reliée à un réseau de communication

## Patentansprüche

1. Schraubwerkzeug, umfassend mindestens ein Rotations-Element (1), (21), (22), (3), das in einem Werkzeugkörper (10) montiert ist und geeignet ist, mindestens eine Vibrationsfrequenz zu erzeugen, die für einen Verschleißzustand des oder der rotierenden Elemente repräsentativ ist,
**dadurch gekennzeichnet, dass** es Mittel (5) zum Messen der Vibrationsfrequenz oder der Vibrationsfrequenzen aufweist, die dazu bestimmt sind, mit Mitteln (52) zur Verarbeitung der Messung zu kommunizieren, die es ermöglichen, diese mit mindestens einer Referenzfrequenz zu vergleichen, um den Verschleißzustand zu bestimmen,
wobei das oder die Rotations-Elemente (1), (21), (22), (3) dazu bestimmt sind, ein Anzugsdrehmoment zu erzeugen, wobei die Mittel (5) zum Messen mindestens Mittel zum Messen des Drehmoments aufweisen.

2. Schraubwerkzeug nach Anspruch 1, **dadurch gekennzeichnet, dass** das oder die Verarbeitungsmittel (52) Berechnungsmittel aufweisen, die ermöglichen, ein Frequenzspektrum zu verarbeiten, das aus einem Signal erhalten wird, das durch die Mittel (5) zum Messen des Drehmoments übertragen wird.

3. Schraubwerkzeug nach einem der Ansprüche 1 und 2, **dadurch gekennzeichnet, dass** die Verarbeitungsmittel (52) Mittel zum Speichern einer Referenzfrequenz in Bezug auf jedes der rotierenden Elemente (1), (21), (22), (3) aufweisen.

4. Schraubwerkzeug nach Anspruch 3, **dadurch gekennzeichnet, dass** eine Referenzfrequenz für mindestens eines der Elemente gespeichert ist, die zu der folgenden Gruppe gehören:
- Motor (1),
- Eckumlenkung Element (3),
- Eingriffselement (21), (22).

5. Schraubwerkzeug nach einem der Ansprüche 1 bis 4, **dadurch gekennzeichnet, dass** es Mittel zum Abgeben eines Alarms aufweist, wenn mindestens eine der gemessenen Vibrationsfrequenzen ein vorbestimmtes Niveau gegenüber einer Referenzfrequenz erreicht.

6. Schraubwerkzeug nach einem der Ansprüche 1 bis 5, **dadurch gekennzeichnet, dass** die Verarbeitungsmittel (52) in einer Steuereinheit (6) integriert sind, die von dem Werkzeug verschieden ist.

7. Schraubwerkzeug nach Anspruch 6, **dadurch gekennzeichnet, dass** die Steuereinheit (6) mindestens eine Anzeigevorrichtung (62) aufweist.

8. Schraubwerkzeug nach einem der Ansprüche 6 und 7, **dadurch gekennzeichnet, dass** die Steuereinheit (6) Kommunikationsmittel (61) aufweist, die geeignet sind, mit einem Kommunikationsnetz verbunden zu werden.

## Claims

1. Tightening tool comprising at least one rotary member (1), (21), (22), (3) mounted in a tool body (10) and capable of producing at least one vibration frequency representing a condition of wear of said one or more rotary members,
**characterised in that** it comprises measurement means (5) for measuring said one or more vibration frequencies and intended to communicate with processing means (52) for processing said measurement, making it possible to compare the latter with at least one reference frequency so as to determine said condition of wear, said one or more rotary members (1), (21), (22), (3) being intended to produce a tightening torque, said measurement means (5) comprising at least means for measuring said torque.

2. Tightening tool according to claim 1, **characterised in that** said processing means (52) comprise calculation means making it possible to process a frequency spectrum obtained on the basis of a signal transmitted by said measurement means (5) for measuring said torque.

3. Tightening tool according to either claim 1 or claim 2, **characterised in that** said processing means (52) comprise means for storing a reference frequency relative to each of said rotary members (1), (21), (22), (3) .

4. Tightening tool according to claim 3, **characterised in that** a reference frequency is stored for at least one of the members from the group consisting of:
- a motor (1);
- an angular member (3);
- a meshing member (21), (22).

5. Tightening tool according to any of claims 1 to 4, **characterised in that** it comprises means for issuing an alert when at least one of said vibration frequencies measured reaches a predetermined level with respect to a reference frequency.

6. Tightening tool according to any of claims 1 to 5, **characterised in that** said processing means (52) are integrated into a control unit (6) that is separate from said tool.

7. Tightening tool according to claim 6, **characterised in that** said unit (6) comprises at least one display device (62).

8. Tightening tool according to one of claims 6 and 7, **characterised in that** said unit (6) comprises communication means (61) capable of being connected to a communication network.
